## Europäisches Patentamt

## European Patent Office

## Office européen des brevets

(19)

(11) Veröffentlichungsnummer: **0 050 240**
**B1**

(12) **EUROPÄISCHE PATENTSCHRIFT**

(45) Veröffentlichungstag der Patentschrift:
25.01.89

(51) Int. Cl.⁴: **H 05 B 1/02, G 05 B 15/02**

(21) Anmeldenummer: **81107724.7**

(22) Anmeldetag: **29.09.81**

(54) Anordnung zur Steuerung der Energiezuleitung an Elektroherde.

(30) Priorität: **20.10.80 DE 3039514**

(43) Veröffentlichungstag der Anmeldung:
**28.04.82 Patentblatt 82/17**

(45) Bekanntmachung des Hinweises auf die Patenterteilung:
**25.01.89 Patentblatt 89/4**

(84) Benannte Vertragsstaaten:
**CH DE FR GB IT LI NL**

(56) Entgegenhaltungen:
**EP-A-0 023 971**
**EP-A-0 024 798**
**JP-A-55 043 377**
**US-A-3 569 656**
**US-A-4 011 428**
**US-A-4 158 759**
**US-A-4 190 756**
**US-A-4 225 776**
**US-A-4 309 584**

**PATENT ABSTRACTS OF JAPAN, unexamined applications, Sektion M, Band 4, no. 84, 17. Juni 1980, THE PATENT OFFICE JAPANESE GOVERNMENT, p. 121 M 16**
**ELEKTRONIK, Fachzeitschrift für Entwickler und industrielle Anwender, Heft 7, 10. April 1981, München (DE), "Mikrocomputer für die Hausfrau", p. 26**

(73) Patentinhaber: **Bosch- Siemens Hausgeräte GmbH, Hochstrasse 17, D-8000 München 80 (DE)**

(72) Erfinder: **Waigand, Helmut, Dipl.- Ing., Traunstrasse 18 d, D-8221 St. Georgen (DE)**
Erfinder: **Husslein, Julius, Dipl.- Ing., Am Birkenweg 1, D-8221 Vachendorf (DE)**
Erfinder: **Hess, Helmut, Gartenstrasse 13, D-8225 Traunreut (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die vorliegende Erfindung bezieht sich auf eine Anordnung in einem Elektroherd mit thermischen und hochfrequenten Heizquellen und einer Ansteueranordnung für diese Heizquellen unter Verwendung einer Mehrzahl von in einem Eingabe-/Anzeigefeld angeordneten Funktionseingabetasten und mehrstelligen numerischen Anzeigen zur Eingabe und Anzeige der Steuerwerte der Steuerschaltung, welche eine Temperatur-Zeit-Steuerschaltung enthält, über welche die Heizquellen zur Bereitstellung vorwählbarer Heiztemperaturen und/oder Heizenergien ansteuerbar sind und über der der Beginn und das Ende der Energiezufuhr und das dazwischen abzuarbeitende Temperatur-Zeit-Profil für einen Garungsprozeß steuerbar ist.

Es ist hinlänglich bekannt, beispeilsweise aus US-A-4 225 776, insbesondere zur Abwicklung von Brat- und Backvorgängen eine Zeitschaltung einzusetzen, welche den Beginn und das Ende eines temperaturgeregelten Garungsprozesses schaltet. Insbesondere ausgelöst durch die Entwicklung in der Halbleiter- und in der Mikroprozessortechnik ist es auch bekannt geworden, Garungsprozesse automatisch zu steuern, bei welchen in unterschiedlichen vorgegebenen Garungsprozeßphasen unterschiedliche Heizungstemperaturwerte auftreten. Mit Hilfe dieser Anordnungen können verschiedene Garungsprozeßabläufe eingestellt werden. Die Einstellung kann entweder individuell oder für einen bestimmten Garungsprozeßablauf fest eingestellt erfolgen.

Es sind Elektroherde z. B. aus JP-A-55-43 377 bekannt, bei welchen über Funktionseingabetasten die Ansteuerwerte für die Heizquellen einzugeben sind und über numerische Anzeigen darstellbar sind. Als Heizquellen kommen dabei thermische und/oder hochfrequente Heizquellen zum Einsatz. Für unterschiedliche Funktionseingaben sind unterschiedliche Eingabetasten und Anzeigen bereitgestellt. Darüber können individuell Heizwerte oder zu erzielende Temperaturwerte bzw. auch ganze Heizwerte- oder Temperaturwerte-Profile für Garungsprozesse eingegeben werden. Eine Vielzahl unterschiedlicher Eingabeerfordernisse führt bei diesem Stand der Technik zu entsprechend großen und aufwendigen Eingabe-/Anzeigefeldern mit einer Vielzahl von Funktionseingabetasten und numerischen Anzeigen.

Ausgehend von diesem Stand der Technik ist es die Aufgabe der vorliegenden Erfindung, eine Anordnung zur Steuerung der Energiezuleitung an Elektroherden bereitzustellen, mit deren Hilfe es möglich ist, Eingabekriterien unterschiedlicher Wertigkeit in einfacher Art und Weise aber mit hoher Eingabesicherheit zur Ansteuerung einer Auswerte- und Garungsprozeß-Steuerschaltung durchzuführen. Eine Anordnung, welche diesen Anforderungen gerecht wird, ist erfindungsgemäß durch die Merkmale von Anspruch 1 gekennzeichnet.

Eine Anordnung nach diesen erfindungsgemäßen Merkmalen bietet zwei grundsätzlich unterschiedliche Möglichkeiten zur Eingabe von Steuerkriterien zur Durchführung des jeweiligen Garungsprozesses. Die eine Möglichkeit besteht darin, individuell aufeinanderfolgenden unterschiedlichen oder gleich langen Heizungsperioden unterschiedliche Heiztemperaturwerte zuzuordnen. Für die zweite Eingabemöglichkeit ist die Voraussetzung zu schaffen, in der Garprozeß-Steuerschaltung software- oder hardwaremäßig vorgegebene Temperatur-Zeit-Profile auszuwählen, welche für den durchzuführenden Garprozeß angewandt werden. Die Auswahl eines Temperatur-Zeit-Profils erfolgt zweckmäßigerweise im Hinblick auf die Eigenschaften des zu garenden Gutes. Sowohl die Art des zu garenden Gutes als auch dessen Gewicht stellen gute und ausreichende Einstellungsparameter dar.

Gemäß der bevorzugten Weiterbildung der erfindungsgemäßen Anordnung wird erreicht, daß ein und dieselbe Steuerschaltung und eine Anzahl von Funktionseingabe-Tasten wahlweise zur Durchführung automatischer Bratvorgänge mit thermischer Heizung oder für die Garungsprozess-Steuerung mit Mikrowellenheizunng nutzbar sind. Auf diese Weise wird der steuerungstechnische Aufwand auf ein Mindestmaß reduziert und die Eingabeprozedur für die Bedienungsperson vereinfacht.

Nach einer bevorzugten Ausgestaltung ist die erfindungsgemäße Anordnung und/oder deren bevorzugte Weiterbildung dadurch gekennzeichnet, daß den Funktionseingabetasten im Eingabe/Anzeigefeld den Betriebszustand und/oder die Betriebsbereitschaft der Funktionseingabetasten signalisierende Anzeigeelemente zugeordnet sind. Verwendet werden insbesondere LED-Anzeigeelemente, welche direkt durch Halbleiterbausteine oder Mikroprozessor-Schaltungen ansteuerbar sind.

Im Zusammenhang mit einer weiteren bevorzugten Ausgestaltung der erfindungsgemäßen Anordnung, die dadurch gekennzeichnet ist, daß eine Steuerungstechnik vorgesehen ist, welche die jeweilige Anschaltung einer Funktionseingabetaste und des zugeordneten Anzeigeelementes an die Auswerte- und Garungsprozeßsteuerschaltung in vorgegebener Reihenfolge wahlweise durchführt, wird durch die Anzeige der Betriebsbereitschaft der Funktionstasten eine vorzügliche Bedienenführung geboten. Darüber hinaus sind durch die Anzeigeelemente eingestellte Betriebszustände, deren Durchführung abläuft bzw. noch bevorsteht, signalisiert.

Bevorzugterweise ist eine Zeitschaltung zur Sicherung einer vorgegebenen Zeitspanne zwischen der letzten Betätigung einer Funktionseingabetaste und dem Einschaltungsbeginn für die Garungsprozess-Steuerung zur Durchführung des Garungsprozesses angeordnet. Diese Zeitschaltung erzeugt eine Zeitspanne zwischen dem Ende der Eingabeprozedur und dem Anfang des Garungsprozesses, wenn dieser ohne gewollte Zeitverzögerung beginnen soll. Während dieser Zeispanne, welche zweckmäßigerweise z. B. 10 Sekunden betragen soll, sind Korrekturen der Eingabe für den Garungsprozess durchführbar. Diese Zeitspanne geht nicht zu Lasten der eigentlichen Garungsprozesszeitdauer. Diese Zeitspanne zur Korrekturmöglichkeit von Einstellkriterien ist deshalb zweckmäßig, da Korrekturen während des Garungsprozesses unwillkürlich zu schwer kontrollierbaren Zustandsbedingungen führen.

Nach einer weiteren bevorzugten Ausgestaltung ist die erfindungsgemäße Anordnung dadurch gekennzeichnet, daß im Eingabe-Anzeigefeld der Garungsprozess-Automatik des Elektroherdes ein zweistelliges Gewichtsanzeigefeld und ein fünfstelliges Zeitanzeigefeld jeweils für numerische Zeichendarstellungen angeordnet sind, der das Gewichtsanzeigefeld sind jeweils die das Gargut betreffenden Gewichtsangaben anzeigbar und zwar in einem Bereich von 0,5 kg bis 4 kg in 0,1 kg-Sprünge. Auf den Zeitanzeigefeld wird außerhalb von Automatik-Betrieben die Tageszeit angezeigt und zwar vier- bzw. dreistellig, nämlich die Stundenangabe zwei- oder einstellig und die Minutenangabe zweistellig. Für den automatischen Ablauf eines Garungsprozesses wird die Tageszeitanzeige durch eine maximal fünfstellige Anzeige der Garungsprozessdauer bzw. der Garungsprozessabschnitte ersetzt. Für die Stundenanzeige steht lediglich eine Anzeigestelle zur Verfügung, da maximal nur einstellige Stundenwerte, normalerweise bis zum Stundenwert vier voreinstellbar sind.

Nach einer weiteren bevorzugten Weiterbildung ist die erfindungsgemäße Anordnung dadurch gekennzeichnet, daß als Auswerte- und Garungsprozeßsteuerschaltung eine Mikroprozessorschaltung angeordnet ist. Durch entsprechende Organisation dieser Mikroprozessorschaltung können eine ausreichende Anzahl von Garungsprozessabläufen steuerbar sein, welche durch unterschiedliche Kriterien ausgelöst werden.

Ein nach den Merkmalen der Erfindung ausgestaltetes Ausführungsbeispiel ist anhand der Zeichnung im folgenden näher beschrieben. Es zeigen:
Fig. 1 ein Eingabe/Anzeigefeld einer Garungsprozess-Automatik und
Fig. 2 eine schaltungstechnisch ausgeführte Steuerung.
Kernstück zur Steuerung von Garungsprozessen in einem Elektroherd, welcher thermische und hochfrequente Heizquellen beinhaltet, ist eine Mikroprozess-Steuerschaltung, in welche die Einstellkriterien durch im Eingabe/Anzeigefeld der Garungs- Prozess-Automatik des Elektroherdes zugeführt werden. Zur Überwachung der Eingabekriterien ist ein zweistelliges Anzeigefeld 1 und ein fünfstelliges Anzeigefeld 2 für numerische Anzeigesymbole im Eingabe/Anzeigefeld der Garungsprozess-Automatik angeordnet. Jeder der Funktionseingabetasten 3 bis 9 ist unmittelbar darüber im Eingabe/Anzeigefeld je ein LED-Anzeigeelement 13 bis 19 zugeordnet. Die Funktionstaste 10 dient zur Eingabe einer Löschfunktion. Aus Sicherheitsgründen ist die damit zu beeinflussende Schaltung derart ausgelegt, daß lediglich eine zweifache Betätigung innerhalb einer vorgegebenen kurzen Zeitspanne den ausgewählten Prozessablauf löscht. Bei Betätigung der Funktionseingabetaste 11 wird die Möglichkeit zur Eingabe der Tageszeiteinstellung gegeben. Der eigentliche Einstellbetrag wird über den Bedienknopf 12 eingegeben, welcher in beiden Richtungen drehbar ist. Je nach Drehrichtung des Bedienknopfes werden durch die nachgeschaltete Schaltungsmaßnahme vorwärtszählende oder rückwärtszählende Eingabewerte geschaltet, deren Einstellergebnis bei der Zeitanzeige durch das Anzeigefeld 2 dargestellt werden.

Für den Betrieb mit Mikrowellenheizung sind zur Eingabe von Garungsprozessabläufen die Funktionseingabetasten 4, 5, 6, 7 vorgesehen. Jeder dieser Tasten ist eine Beizleistungsstufe zugeordnet Die Stufung der Heizleistung ist abfallend von der Funktionseingabetaste 4 bis zur Funktionseingabetaste 7 8 : 4 : 2 : 1. Die Betätigung der Funktionseingabetasten 4, 5, 6, 7 und damit die Eingabe der unterschiedlichen Heizleistungen kann in beliebiger Reihenfolge erfolgen. Zusätzlich zur Eingabe der jeweils gewünschten Heizleistung in der vorgegebenen Stufung ist es aber erforderlich, auch eine Eingabe der Zeitspanne vorzunehmen, in der diese Heizleistung wirken soll. Durch die schaltungstechnischen Maßnahmen wird erreicht, daß bei Betätigung einer der Funktionseingabetasten 4, 5, 6, 7 ein Einstellwort für die zugeordnete Heizleistung in die Steuerschaltung eingegeben wird. Gleichzeitig leuchtet das zugeordnete LED-Anzeigeelement 14, 15, 16, 17 auf und auf dem Anzeigefeld 2 erscheinen die äußeren Konturen der fünf Ziffernstellen. Nunmehr kann durch Betätigung des Bedienknopfes 12 die Zeiteinstellung erfolgen. Ist diese abgeschlossen, so kann die betätigte Funktionseingabetaste 4, 5, 6, 7 losgelassen werden. Die eingegebenen Werte bleiben gespeichert und das zugeordnete LED-Anzeigeelement 14, 15, i6, 17 leuchtet weiter. Ebenso wird der eingestellte Zeitwert weiterhin angezeigt. Nunmehr kann eine weitere der Funktionseingabetasten 4, 5, 6, 7 betätigt werden und ein weiterer Wert für die nunmehr anzuwendende Zeitperiode eingegeben werden. Nach Loslassen dieser zweiten Funktionseingabetaste wird im Anzeigefeld 2 die Summe der beiden eingestellten Heizfolgen angezeigt. Dieser Vorgang kann wiederholt werden. Es ist vorgesehen, nur tatsächlich eingestellte Werte anzuzeigen, d. h., daß der vorliegende Null-Stellenwert nicht angezeigt werden, sondern dunkel gesteuert ist.

Es ist steuerungstechnisch dafür Sorge getragen, daß durch die Eingabe nicht bestimmte vorgegebene Prozedurwerte überschritten werden. So soll die insgesamt durchzuführende Gardauer der höchsten Leistungsstufe lediglich eine Stunde, die der zweiten und der dritten Leistungsstufe höchstens zwei Stunden und die der vierten Leistungsstufe höchstens vier Stunden betragen. Darüber hinaus soll die Eingabe der höchsten Leistungsstufe zweimal hintereinander nicht möglich sein. Die Summe der Garzeiten darf die Spanne von vier Stunden nicht überschreiten. Durch steuerungstechnische Maßnahmen sind insbesondere beim Einsatz einer Mikroprozessorschaltung diese Bedingungen ohne weiteres realisierbar.

Nach dem Loslassen der zuerst betätigten Funktionseingabetaste 4, 5, 6, 7 wird das LED-Anzeigeelement 13 in einen Blinkzustand versetzt. Dies zeigt an, daß die Funktionseingabetaste 3, welche die Garungsprozeßsteuerung auslöst, betätigt werden kann. Der Garungsprozess beginnt jedoch erst nach einer vorgegebenen Zeitspanne, beispielsweise nach 15 Sekunden. In dieser Zeit können weitere Eingaben und Korrekturen für den Garungsprozess eingegeben werden.

Während der gesamten Gardauer wird am Anzeigefeld 2 die Restzeit des Garprozesses angezeigt. Ist der Garprozess beendet, so wird wieder die Tageszeit angezeigt.

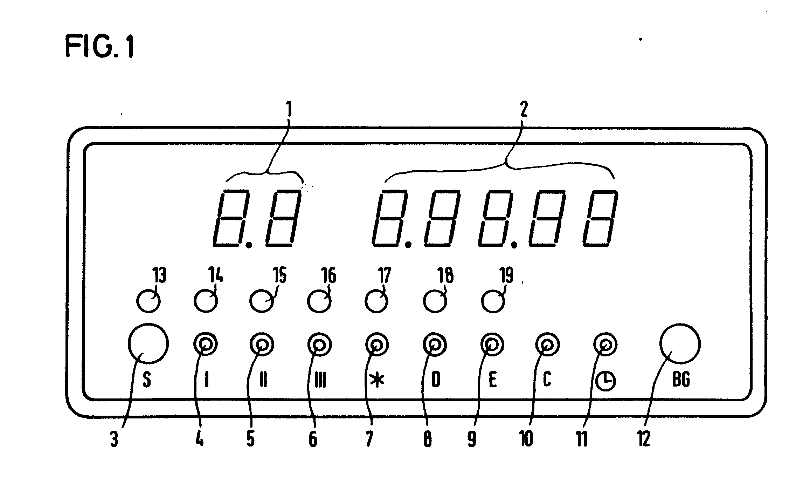

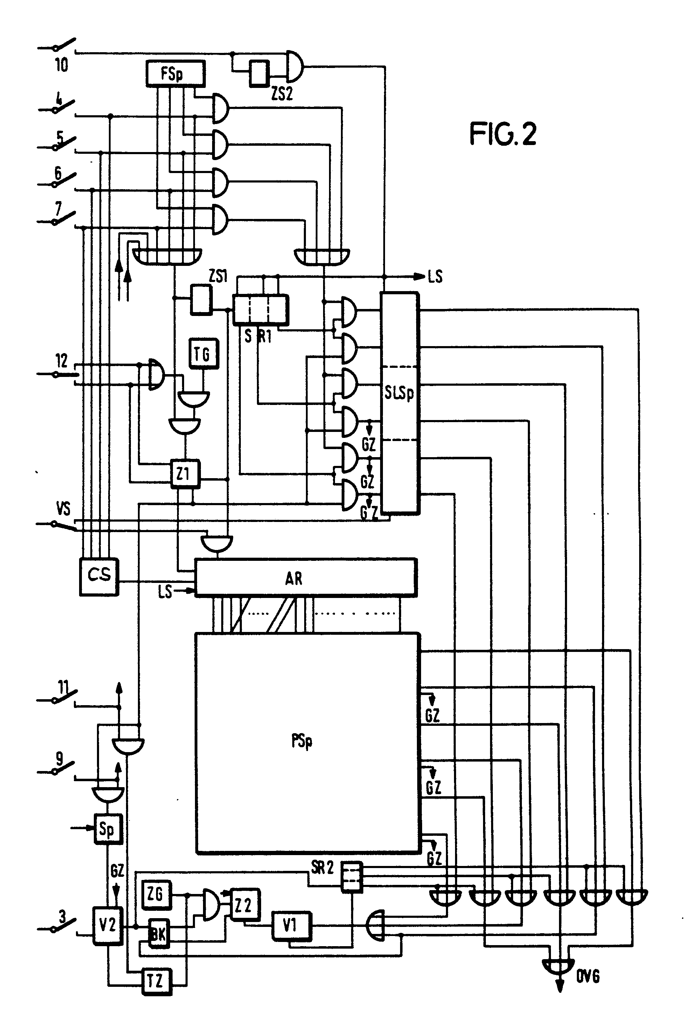

Wird für den Garungsprozess ein Bratautomatik-Betrieb mit thermischer Heizung gewählt - diese Auswahl erfolgt über einen in Figur 1 nicht näher dargestellten und beschriebenen Vorwählschalter (VS in Fig. 2) - so blinken die LED-Anzeigeelemente 14, 15, 16. Durch die Betätigung einer der drei Funktionseingabetasten 4, 5, 6 ist eine von drei Bratautomatik-Verfahren auswählbar, welche sich nach der Art des zu garenden Gutes richtet. Das der betätigten Eingabetaste 4, 5, 6 zugeordnete LED-Anzeigeelement 14, 15, 16 leuchtet nunmehr durchgehend, während die beiden anderen LED-Anzeigeelement völlig erlöschen. Auf dem Anzeigefeld 1 erscheint der Wert 0,5 für die Eingabe des Gewichtes 0,5 kg. Die Einstellung des Betrages, der dem Gewicht des zu garenden Gutes entspricht, wird über den Bedienknopf 12 durchgeführt und im Anzeigefeld 1 in 0,1 kg.-Stufungen angezeigt.

Nach Loslassen der betätigten Funktionseingabetasten 4, 5, 6 wird auf dem Anzeigefeld 2 das frühestmögliche Garzeitende angezeigt. Es wird eine Zeitschaltung in Gang gesetzt, welche für eine Zeitspanne von beispielsweise 10 Sekunden schaltungstechnisch die Möglichkeit eröffnet, die Funktionseingabetaste 7 zu drücken, damit kann die ursprünglich eingestellte Garzeit verlängert werden und zwar um eine Auftauperiode für gefrorenes Gargut. Danach wird das nunmehr ermittelte Garzeitende auf dem Anzeigefeld 2 dargestellt. Während einer weiteren Wartezeit von beispielsweise 10 Sekunden kann das Ende der Garzeit nach Belieben nach rückwärts verschoben werden. Um diese Möglichkeit zu kennzeichnen, leuchtet das LED-Anzeigeelement 19 auf. Bei Betätigung der Funktionseingabetaste 9 wird die Eingabe zur Verschiebung des Garprozessendes über den Bedienknopf 12 möglich.

Durch Betätigung der Funktionseingabetaste 8 wird die Möglichkeit geschaffen, die Dauer bzw. die Restdauer des durchzuführenden Garungsprozesses auf dem Anzeigefeld 2 zur Anzeige zu bringen. Bei Betätigung der Funktionseingabetaste 9 wird auf dem Anzeigefeld 2 jeweils das Ende des Garungsprozesses angezeigt. Während ein Bratprozess abläuft, sind alle Tasten für Verstellungen unwirksam geschaltet. Lediglich durch die Funktionstaste 10 kann die Bratprozess-Automatik gelöscht werden und zwar lediglich bei zweimaliger Betätigung dieser Taste innerhalb eines Zeitraumes von zwei bis drei Sekunden, um ein zufälliges Löschen zu verhindern.

Unter Verwendung der erfindungsgemäßen Maßnahmen ist es auch möglich, den Mikrowellenbetrieb mit dem thermischen Heizbetrieb zu kombinieren. In diesem Falle wird die Mikrowellenheizung über die automatisch Steuereinrichtung gesteuert, während die thermische Heizleistung konventionell von Hand eingestellt wird.

Selverständlich ist es auch möglich, wie bei bekannten Elektroofensteuerungen auch akustisch Zeitabläufe zu signalisieren bzw. auch Selbstreinigungsvorgänge zu steuern.

Die in einer Steuerschaltung durchzuführenden Funktionsabläufe sind zum besseren Verständnis anhand einer Schaltungsanordnung in Hardwareausführung beschrieben. Um die Übersichtlichkeit zu erhalten, sind Maßnahmen, die der Anzeige der eingestellten Werte dienen, nicht dargestellt.

Wie bereits beschrieben wurde, sind die Schalter 4, 5, 6, 7 zur Eingabe jeweils zweier unterschiedlicher Funktionen angeordnet. Die Auswahl erfolgt über einen Vorwählschalter VS, über welchen der Garungsmodus "Bratautomatik" unter Verwendung von thermischer Heizenergie oder der Garungsmodus "Mikrowellenbetrieb" eingestellt werden kann. In der dargestellten Lage des Schalters VS ist die Betriebsweise "Bratautomatik" eingestellt. Wenn eine der Tasten 4, 5, 6 geschlossen wird, so wird über eine Codierschaltung CS an ein Adressregister AR ein binärer Wert, welcher der Art des zu garenden Gutes zugeordnet ist, abgegeben. Zusätzlich wird dem Adressregister AR durch Durchschaltung eines Taktgenerators TG bei gleichzeitiger Betätigung des Bedienknopfes 12 ein binärer Wert, welcher im Hinblick auf das Gewicht des zu garenden Gutes ausgewählt wird, über einen Binärzähler Z1 zugeführt. Bei zusätzlicher Betätigung der Funktionseingabetaste 7 wird ein zusätzlicher Adresswert im Adressregister AR gespeichert. Die endgültige Übernahme und Festschreibung der Werte im Adressregister AR verfolgt durch einen am Ausgang einer Zeitstufe ZS 1 abgeleiteten Signal. Eine Neueingabe bzw. eine Abänderung von Einstellwerten ist nunmehr nur möglich, wenn durch zweimaliges Betätigen der Funktionstaste 10 unter Einschaltung einer Zeitstufe ZS 2 ein Löschsignal LS dem Adressregister AR zugeführt wird.

Entsprechend den eingestellten Werten wählt das Adressregister aus einem Programmspeicher PSp eine Folge von gespeicherten Werten aus, die den Fortlauf des automatischen Bratprozesses bestimmen.

Ist der Schaltkontakt des Vorwählschalters VS in seine andere Einstell-Lage geschaltet, so ist eine Eingabe von Einstellwerten in das Adressregister AR nicht möglich Vielmehr ist in diesem Fall ein Schreib-Lese-Speicher SLSp mit Steuerwerten füllbar. Jeder der Funktionseingabetasten 4, 5, 6, 7 ist in je einer Stufe eines Festwertspeichers FSp ein Speicherwert zugeordnet, welcher einem einzustellenden Temperaturwert bzw. einer einzustellenden Heizleistung entspricht. Die Funktionseingabetasten 4, 5, 6, 7 sind in beliebiger Reihenfolge betätigbar. Die Eingabereihenfolge bestimmt die Reihenfolge der Garungs-Prozess-Schritte. Der Schreib-Lese-Speicher SLSp weist drei Speicherstufen auf, welche durch ein Schieberegister SR1 nacheinander ansteuerbar sind. Bei Betätigung einer der Funktionseingabetasten 4, 5, 6, 7 wird aus dem Festwertspeicher FSp der zugeordnete Wert für die Heizleistung in die erste, d. h. unterste Speicherstelle des Schreib-Lese-Speichers SLSp über Und-Und/Oder-Verknüpfungsglieder eingelesen. Gleichzeitig wird der Taktgenerator TG zu dieser ersten Speicherstufe des Schreib-Lese-Speichers SLSp durchgeschaltet, so daß es möglich ist, über den Bedienknopf 12 einen Wert für die Dauer anzugeben, für welche der eingestellte Wert für die Heizleistung in Garungs-Prozessablauf zur Verfügung gestellt werden soll. Nach einer durch die Zeitstufe ZS1 sichergestellten Wartezeit schaltet das Schieberegister SR1 den Schreib-Lese-Speicher SLSp um eine Stufe weiter und eine weitere Eingabe der Einstellwerte für die Heizleistung und die Heizdauer der zweiten Garungsphase kann erfolgen. Daran anschließend kann auch noch eine dritte Eingabe dieser Werte für eine dritte Garungsprozessphase erfolgen.

Ist entweder im Programmspeicher PSp über das Adressregister AR ein Garungsprozess-Ablaufprogramm ausgewählt oder im Schreib-Lese-Speicher SLSp ein derartiges Garungsprozess-Ablaufprogramm eingespeichert, so können diese Speicherwerte für die Steuerung des eigentlichen Garungsprozesses herangezogen werden. Dazu wird verwendet ein Zeittaktgenerator ZG, welcher über einen Binärzähler Z2 Zeitwerte einer Vergleichsschaltung V1 zur Verfügung stellt. Diese Vergleichsschaltung V1 vergleicht diese Zeitwerte mit den Zeitwerten, welche im Ablaufprogramm entweder aus dem Programmspeicher PSp oder dem Schreib-Lese-Speicher SLSp angeboten werden. Diese Vergleichsschaltung V1 steuert ein Schieberegister SR2 an, welches nacheinander über Oder-Verknüpfungsglieder die Speicherstufen zur Auswertung in der Vergleichsschaltung V1 bzw. zur Steuerung der Temperatureinstellung über das Oder-Verknüpfungsglied OVG durchsteuern. Die Ansteuerung des Binärzählers Z2 erfolgt über eine bistabile Kippstufe BK von einer Vergleichsschaltung V2 aus. Diese Vergleichschaltung V2 vergleicht einen eingestellten Speicherwert in einem Speicher Sp, welcher über den Taktgenerator bei Betätigung des Bedienknopfes 12 und der Funktionseingabetaste 9 beschreibbar ist, mit der über den Tageszeitzähler TZ zugeführten Wert. Damit wird aus dem eingegebenen Wert für das Ende der Garzeit auch der Beginn des Garungsprozesses festgelegt.

Bei gleichzeitiger Betätigung der Funktionseingabetaste 11 ist gesteuert durch den Bedienknopf 12 aus dem Taktgenerator TG eine Korrektur oder Eingabe der Tageszeit durchführbar.

Um den Aufwand an schaltungstechnischen Bauelementen möglichst gering zu halten und eine Vielfalt von steuertechnischen Variationsmöglichkeiten zu bieten, ist es vorteilhaft und zweckmäßig, zur Durchführung der steuertechnischen Maßnahmen anstelle der anhand der Figur 2 beschriebenen Schaltungsmaßnahmen eine entsprechend organisierte Mikroprozessorsteuerung vorzusehen.

**Patentansprüche**

1. Anordnung in einem Elektroherd mit thermischen Heizquellen und Mikrowellen-Heizquellen sowie mit einer diese mit Heizleistung versorgenden Ansteueranordnung unter Verwendung einer Mehrzahl von in einem Eingabe-/Anzeigefeld angeordneten Funktionseingabetasten (4 - 7) und mehrstelligen numerischen Anzeigen (1, 2) zur Eingabe und Anzeige von Heiztemperatur bzw. Heizleistungs-Steuerwerten und zur Auswahl von Bratautomatik-Verfahren der Garprozeß-Steuerschaltung (FSp, SLSp, PSp) und unter Verwendung einer Zeitsteuerung, über welche Beginn und Ende des Garprozesses über ein Temperatur-Zeit-Profil oder ein Leistungs-Zeit-Profil gesteuert wird, dadurch gekennzeichnet, daß die Funktionseingabetasten (4, 5, 6, 7) durch einen Vorwählschalter (VS) in zwei verschiedene Eingabekreise schaltbar sind, derart, daß dieselben Funktionseingabetasten (4, 5, 6, 7) in der Stellung des Vorwählschalters (VS) für Mikrowellenbetrieb zur Vorgabe von Heizleistungswerten (I, II, III, *) zusammen mit Zeitdauerwerten dienen und in der Stellung für Bratautomatik zur Vorgabe von Bratprogrammen mit zugehörigem Temperatur-Zeit-Profile zusammen mit Gewichtswerten des Bratguts dienen, wobei durch einen zusätzlichen Bedienknopf (12) entsprechend der Stellung des Vorwählschalters (VS) entweder die Zeitdauerwerte oder die Gewichtswerte eingegeben werden, die auf Bereichen (1, 2) des Anzeigefeldes digital angezeigt werden.

2. Anordnung nach Anspruch 1, dadurch gekennzeichnet, daß den Funktionseingabetasten (4, 5, 6, 7) im Eingabe-/Anzeigefeld den Betreibszustand und/oder die Betriebsbereitschaft der Funktonseingabetasten (4, 5, 6, 7) signalisierende Anzeigeelemente (14, 15, 16, 17) zugeordnet sind.

3. Anordnung nach Anspruch 2, dadurch gekennzeichnet, daß logische Verknüpfungsglieder vorgesehen sind, welche in der Stellung des Vorwählschalters (VS) für Mikrowellenbetrieb die jeweilige Anschaltung einer Funktionseingabetaste (4, 5, 6, 7) und des zugeordneten Anzeigeelementes (14, 15, 16, 17) an die Garprozess-Steuerschaltung in der von der Beidenperson vorgegebenen Reihenfolge durchführen (Fig. 2).

4. Anordnung nach einem der Ansprüche 1 bis 3, dadurch gekennzeichnet, daß eine Zeitschaltung zur Sicherstellung einer vorgegebenen Zeitspanne zwischen der letzten Betätigung einer Funktionseingabetaste (4, 5, 6, 7) und dem Einschaltungsbeginn (3) für die Garprozess-Steuerschaltung zur Durchführung eines Garprozesses angeordnet ist.

5. Anordnung nach einem der Ansprüche 1 bis 4, dadurch gekennzeichnet, daß im Eingabe-/Anzeigefeld der Garprozess-Steuerschaltung des Elektroherdes ein zweistelliges Gewichtsanzeigefeld (1) und ein fünfstelliges Zeitanzeigefeld (2) jeweils für die nummerische Zeichendarstellungen angeordnet sind.

6. Anordnung nach einem der Ansprüche 1 bis 5, dadurch gekennzeichnet, daß als Garprozess-Steuerschaltung eine Mikroprozessorschaltung angeordnet ist.

**Claims**

1. Apparatus in an electric cooker having thermal heat sources, and microwave heat sources, as well as a control apparatus supplying said sources with heating power using a plurality of function entry keys (4 - 7) being arranged in an entry/display panel and multiple digit digital displays (1, 2) for entry and display of heating temperature and heating power control values and for selection of automatic roasting procedures of the cooking process control circuit (FSp, SLSp, PSp), and using a time control which controls start and end of the cooking process by a temperaturetime profile or by a power-time profile, characterized in that said function entry keys (4 - 7) can be switched by a preselect switch (VS) to different entry circuits in such a way that said function entry keys (4 - 7), with the preselect switch (VS) in the microwave mode, serve for setting heating power (I, II, III,*) together with time-duration values and, in the roast automatic mode, serve for setting roasting programs with corresponding temperature-time profile and the weight values of the roast, the duration or the weight values which are digitally displayed on the parts (1, 2) of the display panel, being introduced by an additional button (12), according to the position of the preselect switch (VS).

2. Apparatus according to claim 1, characterized in that to said function entry keys (4 - 7) in the entry/display panel correspond display elements (14 - 17) which signal the operational mode and/or the readiness for operation of the function entry keys (4 - 7).

3. Apparatus according to claim 2, characterized in that there are provided logic elements which, with the preselect switch (VS) in the microwave mode, effectuate a connection of a function entry key (4 - 7) and the corresponding display element (14 - 17) with the cooking process control circuit, in the sequence provided by the user (Fig. 2).

4. Apparatus according to any of the claims 1 - 3, characterized in that there is provided a timer circuit which assures a predetermined duration between the last operation of a function entry key (4 - 7) and beginning of the switch-on (3) of the cooking process control circuit for the performance of a cooking process.

5. Apparatus according to any of the claims 1 - 4, characterized in that there is provided within the entry/display panel of the cooking process control circuit of the electric cooker a two digit weight display panel and a five digit time display panel each of which being arranged for the digital representation of signs.

6. Apparatus according to any of the claims 1 - 5, characterized in that a microprocessor circuit is provided as the cooking process control circuit.

**Revendications**

1. Dispositif dans une cuisinière électrique ayant des sources de chauffage par voie thermique et des sources de chauffage par micro-ondes, ainsi qu'un dispositif de commande les alimentant en puissance calorifique, en utilisant un grand nombre de touches d'introduction de fonctions (4 à 7) disposées dans un panneau d'introductions/affichages et des affichages (1, 2) numériques à plusieurs chiffres pour introduire et afficher des valeurs de température de chauffage et de puissance calorifique et pour sélectionner des procédés de cuisson automatiques du circuit de commande du processus de fermentation (FSp, SLSp, PSp) et en utilisant une commande en fonction du temps, qui commande le début et la fin du processus de fermentation par un profil température-temps ou par un profil puissance-temps, caractérisé en ce que les touches d'introductions de fonctions (4, 5, 6, 7) peuvent être branchées, par un interrupteur de présélection (VS), dans deux circuits d'introduction différents de façon que les mêmes touches d'introductions de fonctions (4, 5, 6, 7) servent, en la position de l'interrupteur de présélection (VS) pour le fonctionnement en micro-ondes, à prescrire des valeurs de puissance calorifique (I, II, III, *) en même temps que des valeurs de durée et, en la position de cuisson automatique, à prescrire des programmes de cuisson avec profil température-temps associé en même temps que des valeurs de poids du produit à cuire, les valeurs de durée ou ou les valeurs de poids, qui sont affichées numériquement sur des parties (1, 2) du panneau d'affichage, étant introduites à l'aide d'un bouton de manoeuvre (12) supplémentaire, selon la position de l'interrupteur de présélection (VS).

2. Dispositif suivant la revendication 1, caractérisé en ce qu'aux touches d'introduction de fonctions (4, 5, 6, 7) du panneau introductions/affichages, sont associés des éléments d'affichage (14, 15, 16, 17) signalant l'état de fonctionnement et/ou la disponibilité à fonctionner des touches d'introduction de fonctions (4, 5, 6, 7).

3. Dispositif suivant la revendication 2, caractérisé en ce qu'il est prévu des éléments logiques qui, en la position de l'interrupteur de présélection (VS) pour le fonctionnement en micro-ondes, effectuent (figure 2) le branchement d'une touche d'introduction de fonction (4, 5, 6, 7) et de l'élément d'affichage associé (14, 15, 16, 17) au circuit de commande du processuss de fermentation, dans la séquence prévue par l'utilisateur.

4. Dispositif suivant l'une des revendications 1 à 3, caractérisé en ce qu'il est prévu une temporisation assurant un intervalle de temps prescrit entre la dernière manoeuvre d'une touche d'introduction de fonction (4, 5, 6, 7) et le début de la mise en circuit (3) du circuit de commande du processus de fermentation, pour effectuer un processus de fermentation.

5. Dispositif suivant l'une des revendications 1 à 4, caractérisé en ce que, dans le panneau d'introductions affichages du circuit de commande du processus de cuisson de la cuisinière électrique, sont montés un panneau d'affichage de poids (1) à deux chiffres et un panneau d'affichage du temps (2) à cinq chiffres destinés chacun à des représentations numériques de signes.

6. Dispositif suivant l'une des revendications 1 à 5, caractérisé en ce qu'un circuit à microprocesseur est prévu comme circuit de commande du processus de fermentation.

FIG.1

EP 0 050 240 B1

FIG.2